# EUROPEAN PATENT APPLICATION

(11) **EP 2 821 928 A2**
(43) Date of publication of application: **07.01.2015**
(21) Application number: 14175318.6
(22) Date of filing: 01.07.2014
(51) Int. Cl.: G06F 17/30, G06F 3/0485

(54) **Method and system for limiting output results in a mobile telecommunication system**

(30) Priority: 02.07.2013 US 201313934157
(71) Applicant: SAP SE, 69190 Walldorf (DE)
(72) Inventor: ZEDLITZ, Albert, 69190 Walldorf (DE)
(74) Representative: Richardt Patentanwälte PartG mbB

(57) **Abstract**

The present disclosure relates to a method for operating a mobile telecommunication device (700) in a telecommunication system (77). The telecommunication system (77) comprises a database server (711) that is connected to the mobile communications device (700). The mobile telecommunication device (700) is configured to limit output results obtained using data from the database server (711) on a display device of the mobile telecommunication device (700).

## Description

### Background

Mobile devices such as smartphones, tablets, and smart TVs, have become mainstream computing devices. It is expected that several hundreds of millions of mobile devices will be sold in the next years. Application programs in the mobile devices provide a variety of display techniques. The ongoing trend in telecommunication is to provide mobile devices with enhanced performances that can support such mobile applications while controlling the power consumption in the mobile devices.

### Summary

Various embodiments provide a method and apparatus for limiting output results in a mobile telecommunication system as described by the subject matter of the independent claims. Advantageous embodiments are described in the dependent claims.

In one aspect, the invention relates to a method for operating a mobile telecommunication device in a telecommunication system. The telecommunication system comprises a database server that is connected to the mobile communications device The mobile telecommunication device comprises a processor, a display device and a memory; wherein the memory configured to store at least a first, a second and a third application, wherein the first application comprises first instructions that, when executed on the processor, display on the display device a graphical user interface, wherein the second and third applications comprise respective second and third instructions that, when executed on the processor, receive and process a respective first and second data set and display using the first application a respective first and second set of data elements using a first display pattern on the graphical user interface, wherein the first display pattern spans multiple display pages of the graphical user interface. The method comprises configuring the first application for:
- selecting a subset of data elements of the first and second set of data elements to be displayed on the graphical user interface using a second display pattern that spans a reduced number of display pages of the multiple display pages;
- defining a compact data set comprising non-duplicated data of the first and second data sets;
- selecting a data portion of the compact data set required for generating the subset of data elements;
- generating a data access request, the data access request requesting access to the data portion;
- retrieving (or receiving) the data portion from the database server;
- controlling the second and third applications for displaying the subset of data elements on the graphical user interface using the retrieved data portion.

The mobile telecommunication device may comprise at least one of a, smartphone, a PDA, a laptop, a computer, and the like.

The telecommunication system may comprise a Wireless Mesh Networks system, a satellite telecommunication system and/or a digital wireless telecommunication system such as LTE, GSM etc.

The term "data element" or "data set" as used herein refers to data, an item of text, graphics, video, audio, user interface controls, and any other data for presentation via the user interface.

The data element may indicate the content of the access data e.g. the first and second data sets. In another example, the data element may indicate the results (outputs) of a given analysis of accessed data such as the first and second data sets.

The second and the third applications are controlled to not have direct access to the first and second data sets respectively. Said access to the first and second data sets may be done via the first application. The display of the first and second data elements on the graphical user interface may also be done via the first application. For example, the second and the third applications may be controlled to send the first and second set of data elements or information indicating first and second set of data elements to the first application that display them on the graphical user interface.

The step of controlling the second and third applications for displaying the subset of data elements on the graphical user interface using the retrieved data portion comprises: inputting the data portion to the second and the third applications and receiving the subset of data elements.

For example, upon inputting the data portion to the second and third applications, the first application may receive from the second and/or third application an error message (e.g. "NO") e.g. as a result of not being able to generate the subset of data elements and the first application may repeat the method steps above (e.g. select a second subset of data element and corresponding second data portion and control the second and third applications for displaying the second subset of data elements) until a subset of the data elements is received i.e. no error message is received.

The first, second and third applications may comprise web applications using data structured in markup language such as HTML or XML. In this case the data element may comprise markup elements. The second and the third applications may be interactive applications with the graphical user interface. The first application may comprise a swing java application. This first application may comprise an application written in Python, Java or C++ programming language.

The database server comprises a structured query language (SQL) server, wherein the data access request is encoded in the form of SQL statements to indicate at least the data portion.

The term "display pattern" as used herein refers to a pattern of spatially presenting user interface elements on the display device. Such pattern may be obtained by controlling displaying functions (e.g. scrolling function, color function etc.) of the graphical user interface and/or the display device on which the graphical user interface is displayed.

The term "display page" refers to a portion of the graphical user interface to be displayed on display means in a manner perceivable or visible by a user e.g. without using scrolling function of the graphical user interface.

The above features may be advantageous as they may save the processing resources in the communication system. For instance, the usage of processing resources at the mobile telecommunication devices may be reduced because of the smaller data sample that is being processed by the mobile applications.

Another advantage may reside in the fact that the data traffic in the communication system may be reduced as the data sample used for analysis and transferred through the network is reduced.

As it is well known, the scrolling on graphical user interfaces increases the energy consumption in the mobile telecommunication devices. Thus, the present method may have the advantage of further saving energy (or processing resources) at the mobile telecommunication device since the number of display pages is reduced such that the scrolling function is less used.

Another advantage may be that the access or usage time of the mobile telecommunication device may be reduced. This is because, the present method may enable displaying only relevant data elements on the display device and thus saves time required for accessing non-relevant data elements.

The present method may be particularly advantageous for mobile telecommunication devices having small screen size such as smartphones since navigating data on small screens is much more constrained compared to screens having large size e.g. of PC desktops.

Another advantage may be that the present method may better or efficiently secure the data traffic in the network as the amount of data traffic is reduced by selecting only a portion of previously existing data.

Multiple mobile applications display many data elements or items, wherein only few data elements are used. The present method may select and displays only those few data elements while trying to save energy in the telecommunication device.

According to one embodiment, the selecting of the subset of data elements is performed in order to prevent usage of the scrolling function of the graphical user interface. This may further save energy in the mobile telecommunication device.

According to one embodiment, the reduced number of display pages comprises a single display page, wherein of the subset of data elements is displayed on a portion of the single display page. Using a single display page only may easy the access to the data elements while saving energy required for scrolling between multiple display pages.

According to one embodiment, the display device comprises a touch sensitive display screen, wherein the selecting of the subset of the data elements is triggered by an interaction of a user of the mobile telecommunication device with the mobile telecommunication device, the interaction comprising a selection of icons on the display device, each icon corresponding to each data element of the subset of data elements. This may increase the performance of the mobile telecommunication device in the sense that it provides an efficient access to desired data elements only.

According to one embodiment, the selecting of the subset of the data elements is triggered by an interaction of a user of the mobile telecommunication device with the mobile telecommunication device, the interaction comprising navigating using a navigation bar of the graphical user interface through the subset of data elements.

According to one embodiment, the method further comprises generating a database cursor for retrieving the data portion, wherein the data access request indicates the database cursor.

According to one embodiment, the method further comprises for each data element of the subset of the data elements: selecting corresponding data in the data portion used to generate the data element; generating a database cursor for accessing the corresponding data.

These embodiments may be advantageous as they may enable traversal over the records of the data portion and facilitate subsequent processing in conjunction with the traversal, such as retrieval, addition and removal of records.

According to one embodiment, the method further comprises controlling the second and third applications to sequentially display the subset of the data elements based on the generated database cursors.

According to one embodiment, the method further comprises controlling the second and third applications to display in parallel the subset of the data elements based on the generated database cursors.

These embodiments may make use of different models of information processing namely the serial and parallel processing techniques.

According to one embodiment, controlling the first application comprises controlling the first application to act as a hooking application.

In another aspect, the invention relates to a telecommunication device in a telecommunication system. The telecommunication system comprises a database server that is connected to the mobile communications device; the mobile telecommunication device comprising a processor, a display device and a memory; wherein the memory configured to store at least a first, a second and a third application, wherein the first application comprises first instructions that, when executed on the processor, display on the display device a graphical user interface, wherein the second and third applications comprise respective second and third instructions that, when executed on the processor, receive and process a respective first and second data set and display using the first application a respective first and second set of data elements using a first display pattern on the graphical user interface, wherein the first display pattern spans multiple display pages of the graphical user interface, wherein the first application is configured for:
- selecting a subset of data elements of the first and second set of data elements to be displayed on the graphical user interface using a second display pattern that spans a reduced number of display pages of the multiple display pages;
- defining a compact data set comprising non-duplicated data of the first and second data sets;
- selecting a data portion of the compact data set required for generating the subset of data elements;
- generating a single data access request, the single data access request requesting access to the data portion;
- retrieving the data portion from the database server;
- controlling the second and third applications for displaying the subset of data elements on the graphical user interface using the retrieved data portion.

It is understood that one or more of the aforementioned embodiments may be combined as long as the combined embodiments are not mutually exclusive.

A method includes generating a request for data sets in a database via a user interface, modifying the request as a function of a number, n, of data sets visible in the user interface, sending the modified request to the database for execution, and receiving n data sets from the database responsive to the modified request to display on the user interface.

A computer readable storage device has instructions to cause a computer to execute a method. The method includes generating a request for data sets in a database via a user interface, modifying the request as a function of a number, n, of data sets visible in the user interface, sending the modified request to the database for execution, and receiving n data sets from the database responsive to the modified request to display on the user interface.

A system includes a user interface having a capability to display a known number, n, of data sets. The system also includes a connection to a database containing data sets corresponding to an application a cursor corresponding to a set of n records in the database, the cursor configured to interact with the user interface and the database to point to a set of n records to display via the user interface for fulfilling requests for sets of records in the database.

### Brief Description of the Drawings

FIG. 1 is a block diagram of a telecommunication system to select and display records consistent with an interface according to an example embodiment.
FIG. 2 is a flow diagram illustrating a method of limiting a number of records retrieved and displayed according to an example embodiment.
FIG. 3 is a block work flow diagram of processing an example user query according to an example embodiment.
FIG. 4 is a code of implementing a method of limiting displayed results for a query according to an example embodiment.
FIG. 5 is a diagram illustrating results obtained via a method of limiting displayed results for a query according to an example embodiment.
FIG. 6 is a block diagram of a computer system for implementing one or more methods or systems according to an example embodiment.
FIG. 7 schematically depicts a mobile telecommunication device according to the present disclosure.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims. The functions or algorithms described herein may be implemented in software or a combination of software and human implemented procedures in one embodiment. The software may consist of computer executable instructions stored on computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

In a three tier application, the application generally selects a set of data from the database, assembles the set of data and provides it for display and user interaction on the user interface. Most applications simply ignore the fact that more than 10 data sets would not be accessible (e.g. not displayed on a single display page) on a typical mobile user interface display without further interaction with the interface, such as scrolling.

Even if the application only renders a small set of data for display, a large part of the database may be contained in local memory and caches, because not all levels of the architecture are informed about restrictions defined in a user interface layout.

In various embodiments, selected data is reduced as a function of an amount which is displayable on a single display page on an end user display screen. The screen may be fairly small in the case of a mobile device, or may be larger for laptop or desktop type computer systems. In further embodiments, the reduction in selected data may be used in any application with database access to define smaller chunks. The amount of selected data may be equal to that which is displayable on a single display page in a display device (e.g. without using the scrolling function), or may include a few more or less in different embodiments to allow for some amount of scrolling. The reduction in selected data may result in reduced network traffic and memory utilization peaks during processing.

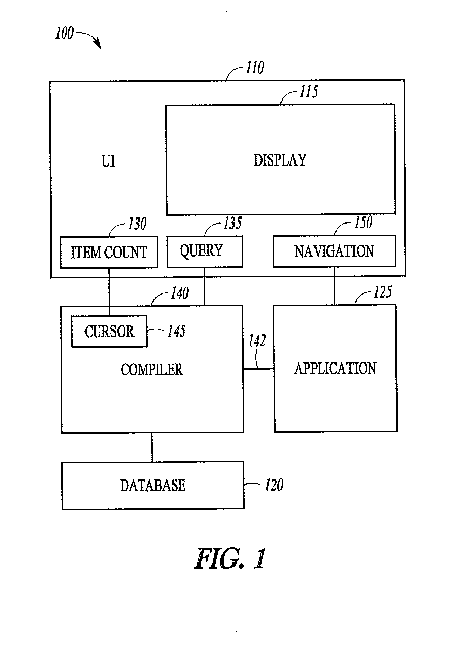

FIG. 1 is a block diagram illustrating a telecommunication system 100. Telecommunication system 100 includes a user interface 110 having a display 115 which is capable of displaying a limited number of sets of data obtained from a database 120. The user interface may be driven by an application 125. Application 125 may be one of many different types of mobile applications.

In one embodiment, the limited number of sets displayable by display 115 is stored in a user interface table 130 as an item count. The item count may also be another number desired by a user or other entity that is not related to the display size, but may be selected for some other reason, that may relate to bandwidth utilization concerns in further embodiments. The user interface 110 provides for the generation of queries 135 which may include multiple select statements. A compiler 140 receives the queries and provides a connection to database 120. In one embodiment, the compiler 140 combines the select statements and evaluates invariants to ensure that common used data is selected only once for an entire page of sets of data to be displayed. The compiler 140 also utilizes a database cursor 145. The item count 130 is mapped to the database cursor in one embodiment. The cursor 145 may be active for a session, such as when a user is logged into an application, or utilizing a set of functions in the application.

In one embodiment, the user interface 110 has a table structure that may be related to database content. The user interface 110 defines the access to the database with all necessary select statements and assigns application 125 hooks 142, which calculate the items that are displayed on a single display page on the user interface 110. The select statements and hooks 142, including database access strategy and method hooks 142 result in the query request set 135.

The compiler 145 combines all the select statements and evaluates invariants to ensure common used data are selected only once for the entire page to be displayed. The item count in the user interface table 130, is mapped to the database cursor 145 as follows:

| | |
|---|---|
| SQLSetStmtAttr(stmt, (SQLPOINTER)SQL_CURSOR_DYNAMIC, 0); | SQL_ATTR_CURSOR_TYPE, |
| SQLSetStmtAttr(stmt, (SQLPOINTER)itemCount, 0); | SQL_ATTR_ROW_ARRAY_SIZE, |

A navigation request 150 in the user interface results into a database cursor navigation:

| |
|---|
| SQLFetchScroll(aHstmt, SQL_FETCH_NEXT, 0); |
| SQLFetchScroll(aHstmt, SQL_FETCH_PRIOR, 0); |

Following this strategy, only the values, which are necessary for the user interface, are physically accessed and transferred. In one embodiment, a limit, n, corresponding to the item count 130 that is displayable on the display 115 is 10 rows, also referred to as sets. Some example requests for data from the database may include selection of user IDs. The number of user IDs may range up to thousands or millions. Queries that are not modified via the item count and corresponding cursor may result in large numbers of results being returned, overloading memory and network capacity. The use of database cursors 145 in one embodiment facilitates dividing queries into multiple different queries for purposes of parallel processing of requests. A result set may result in a set of SQL statements, which may be executed in parallel.

In some embodiments, the item count 130 is calculated prior to generation of select statements, in a method referred as reverse select. "Reverse select" denotes a method, starting with the output design and calculating necessary information based on items that can be displayed on a single display page of the user interface. The application 125 methods are designed as a set of hooks, which are called by the user interface 110.

"Reverse Select" enables applications 125 to find invariants, which would reduce the number of database 120 selects and data transfer to a minimum. In this approach all SQL select statements are gathered at a central place, which would give the entire application possibilities for optimizations. The compiler maps items displayed on a single display page of the user interface to a set of database cursors, which are used for navigation.

The user interface 110 is the master of the database 120 access, which would make it easy to map incoming request and form data to the corresponding database tables.

The user interface 110 selects the application 125, which works on the data. The application 125 on the other hand is free from parsing and dispatching incoming requests. Application method hooks are used for calculation on selected data, either before output or after input. Hooks may perform calculations for security issues, extended data access checks and consistency checks.

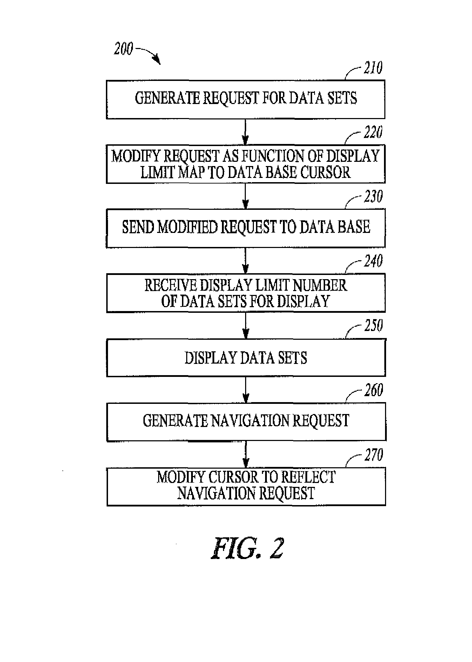

FIG. 2 is a flowchart representation of a method 200 to control database access requests in accordance with a display size limit. At 210, a request for data sets in a database is generated via the user interface, or is otherwise received. The request is then modified as a function of a limit of a number of data sets to be retrieved at 220. The number of data sets may be limited to a number that can be displayed on a user interface display device in one embodiment. The number may be mapped to a database cursor in some embodiments.

The modified request is then sent to the database 230 and may be executed by the database to return the specified number of data sets or less if fewer results exist in the database. At 240, the data sets are received for display, and displayed at 250. In some embodiments, a navigation request may be generated at 260. The navigation request may result from user interaction with the user interface, such as selecting an option to see more results. At 270, the navigation request results in the cursor being modified to reflect the navigation request, and a new set of data being requested from the database and again received and displayed on the display device. In one embodiment, n, corresponds to the number of results to be displayed, wherein n is defined in a user interface table as a visible item count. n is then mapped to the database cursor. Modifying the request at 220 may include gathering select statements and mapping items displayed on a single display page of the user interface to a set of database cursors. The combined data base select statements limit data selected from the database in accordance with the number of data sets identified in the cursors. The set of database cursors may then be used for navigation.

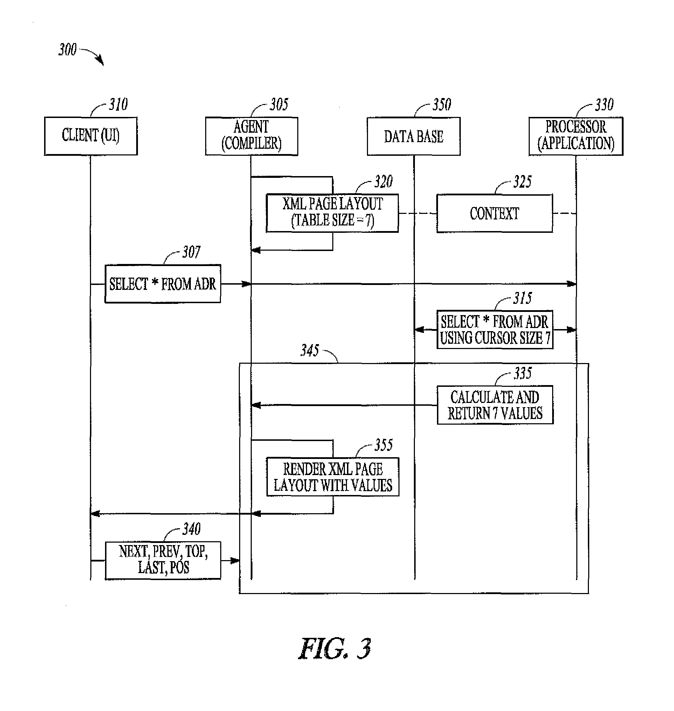

In one example embodiment illustrated at 300 in a block workflow diagram in FIG. 3, a simple query example is shown, illustrating how a query is modified to limit the number of items identified and returned for display. An agent 305 receives a client select request 307 from a client user interface 310 and generates SQL statements 315 according an XML page layout 320, specifying a page layout with a table size of seven. In this example the following XML attributes would trigger the agent:
Context 325: This is the URI (uniform resource identifier) for the processor 330
Command 335: This executes an agent command and connects the backend processor 330
Format 320: Defines the selection scope and format specification

Possible commands are defined by the processor. The processor is determined by URI in context statement 325. After the first request the commands "Top", Prev", "Next", "Pos" and "Last" 340 could be used to navigate in a result set 345 obtained from database 350. An XML page is rendered with the values at 355.

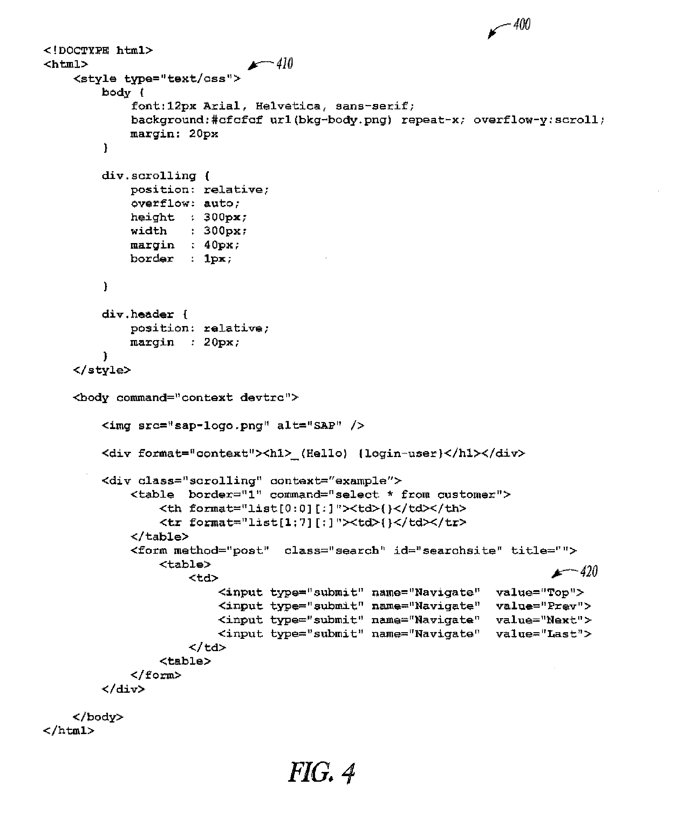

FIG. 4 at 400 illustrates code for performing the above example 300. Style types are defined generally at 410, and navigation commands including "Top", Prev", "Next", and "Last" are defined at 420.

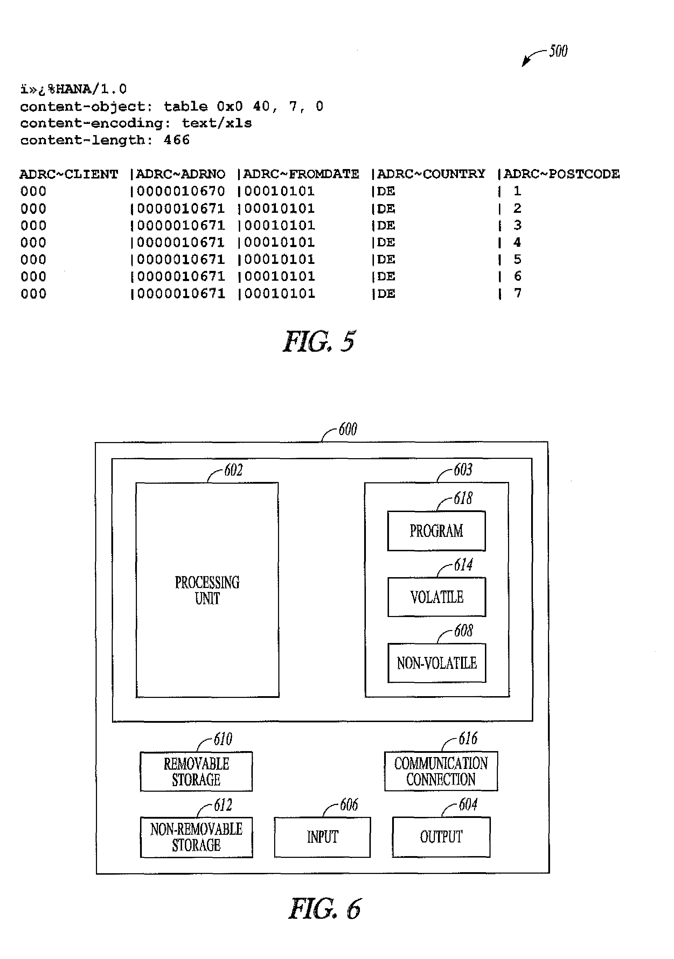

FIG. 5 at 500 illustrates the information returned for display in one embodiment. The database returns seven rows according to the format description, and the processor returns the results in an HTTP format to the agent as shown at 500.

In one embodiment, the agent 305 interprets the rows and replaces the tags with the command and format attributes. The agent 305 puts the first row as header (range specification in <td> for row "[0:0]") and generates an entry for each column (second range specification for column "[:]" together with content format "{}")
<th format="list[0:0][:]"><td>{}</td></th>
All other rows are interpreted as content:
<tr format="list[1:7][:]"><td>{}</td></tr>

The range specification in the <tr> format is taken as size for the database cursor. The Processor returns the actual position in the selection, which could also be used as an item in the XML layout.

In the example above, the processor 330 returns the navigation details with following entry:
content-object: <type> <id> <number of rows> <visible rows> <start row>
In the example the table in database has 40 entries. There are 7 rows starting at position 0.

FIG. 6 is a block schematic diagram of a computer system 600 which may be used to implement various components and methods according to an example embodiment. Computer system 600 may be used to provide a user interface in the form of a hand held wireless device or other type of laptop or desktop personal computer. The application may also run on the same or a different networked computer system, as may the database. In one embodiment, multiple such computer systems are utilized in a distributed network to implement multiple components in a transaction based environment. An object-oriented, service-oriented, or other architecture may be used to implement such functions and communicate between the multiple systems and components. One example computing device in the form of computer 600, may include a processing unit 602, memory 603, removable storage 610, and non-removable storage 612. Memory 603 may include volatile memory 614 and non-volatile memory 608. Computer 600 may include - or have access to a computing environment that includes - a variety of computer-readable media, such as volatile memory 614 and non-volatile memory 608, removable storage 610 and non-removable storage 612. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 600 may include or have access to a computing environment that includes input 606, output 604, and a communication connection 616. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 602 of the computer 600. A hard drive, CD-ROM, and RAM are some examples of articles including a non-transitory computer-readable medium. For example, a computer program 618 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 600 to provide generic access controls in a COM based computer network system having multiple users and servers.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

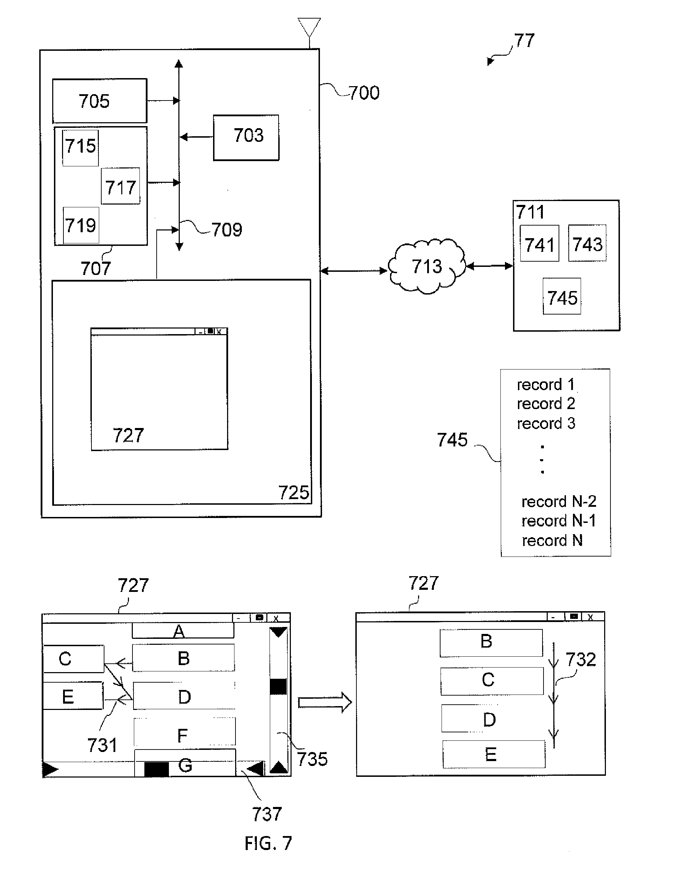

Fig. 7 shows an exemplary mobile telecommunication device 700 in a telecommunication system 77 (e.g. such as system 100). The telecommunication system 77 may comprise, for example, a cellular digital telecommunication system. The mobile telecommunication device 700 may comprise a processor 703, a transceiver 705, a memory 707 each capable of communicating with one or more components of the mobile telecommunication device 700. For example, all components are coupled to a bidirectional system bus 709.

The processor 703 may be a microprocessor, a single core processor, a multicore processor or the like. The processor 703 may control the operation of the mobile telecommunication device 700. The transceiver 705 can be implemented as a transmitting and receiving component of the mobile telecommunication device 700.

The mobile telecommunication device 700 may further comprise a display device 725 (e.g. 115) which displays characters and images and the like. For example, the display device 725 may be a touch sensitive display screen.

The mobile telecommunication device 700 may be connected to a database server 711 through a network 713 such as a cellular digital system telecommunication network. For example, the mobile telecommunication device 700 may be directly connected to the database server 711 or via a base station (not shown) of the cellular-digital wireless telecommunication system. Using the transceiver 705, the mobile telecommunication device 700 may exchange data with the development server 711 via the mobile cellular digital telecommunications network 713.

Memory 707 is configured to store a plurality of mobile applications that are executable on the processor 703.

A first mobile application 715 of the mobile applications comprises first instructions that, when executed, generate on the display device 725 a graphical user interface 727 (e.g. 110).

A second mobile application 717 of the mobile applications comprises second instructions that, when executed on the processor 703, receive and process a first data set and display using the first mobile application 715 a first set of data elements A-C using a first display pattern 731 on the graphical user interface 727.

Using the first display pattern 731 for displaying the data elements A-G may result in multiple display pages of the graphical user interface 727. The scrolling bars 735 and 737 may thus appear on the graphical user interface 727.

Each data element in the set of data elements A-G is positioned (or represented) in a defined region within the graphical user interface 727 following the first display pattern 731.

A third mobile application 719 of the mobile applications comprises third instructions that, when executed on the processor 703, receive and process a second data set and display using the first mobile application 715 a second set of data elements D-G using the first display pattern 731 on the graphical user interface 727.

The first mobile application 715 is configured to select a subset of data elements B-E of the first and second set of data elements A-G to be displayed on the graphical user interface 727 using a second display pattern 733 that spans a reduced number of display pages of the multiple display pages. For example, the selecting of the subset of data elements B-E is performed in order to prevent usage of the scrolling function (e.g. to prevent the display of scrolling bars 735 and 737) of the graphical user interface 727.

The selecting of the subset of data elements B-E may be performed in response to receiving a request indicative of the subset of data elements BE to be displayed on the graphical user interface 727.

In another example, the selecting of the data elements B-E may be performed automatically such that the subset of data elements B-E may be selected randomly. In another example, subset of data elements B-E may be selected as being data elements that can be displayed on a single display page i.e. when using a single display page no scrolling is required.

Upon selecting the subset of data elements B-E, the first mobile application 715 may define a compact data set comprising non-duplicated data of the first and second data sets. For example, the first mobile application 715 may use a database system such as ORACLE or HANA in order to have access to the first and second data sets without need to move them locally at the mobile telecommunication device 700. This may reduce the amount of data to be accessed by the first and second mobile applications 717 and 719.

The first mobile application 715 may select a data portion 745 of the compact data set required for generating the subset of data elements B-E. This may further reduce the amount of data to be accessed by the first and second mobile applications 717 and 719.

Upon defining the data portion to be used, the first mobile application 717 may generate a data access request. The data access request requesting access to the data portion. Here also, the data portion is selected or defined without moving data locally at the mobile telecommunication device 700.

The first mobile application 715 may send the generated data access request to the database server 711 for retrieving or receiving the data portion from the database server 711.

In order to access the data portion 745, the first mobile application 715 may select for each data element of the subset of the data elements B-E corresponding data (e.g. at least part of the records 1-N (such as rows of Fig. 5) comprised in the data portion 745) in the data portion 745 used to generate the data element. For example, records 1-3 may correspond to data element B in the sense that they are used to generate the data element B. Next, the first mobile application 715 may generate a database cursor for each data element of the subset of data elements B-E for accessing the corresponding data in the data portion 745. The database cursors may be used for retrieving the data portion such that the first mobile application 715 retrieves related records 1-N using independent queries.

For example, the database cursor (e.g. 145) of the data element B may be first positioned at the start of the records 1-3 i.e. record 1 used for generating the data element B such that the records 1-3 may be fetched or retrieved into the mobile telecommunication device 700 as needed from the cursor, one record at a time starting from record 1.

Upon receiving the data portion the first mobile application 715 may control the second and third applications 717 and 719 for displaying the subset of data elements B-E on the graphical user interface 727 using the retrieved data portion 745.

Although two applications, the second and the third applications are shown in this example as displaying data elements on the display device and controlled for display the subset of data elements, more than two applications may be used and controlled for displaying only part of their data elements as described above.

A data element A-G may be represented by a user interface element that may comprise a button, a text box, a tab, an icon, a text field, an input field, a pane, a check-box item, a menu bar, a title bar, an action bar or item group or the like. A user interface element can likewise be an image, a displayed alphanumeric character or any combination thereof.

## Claims

1. A method for operating a mobile telecommunication device (700) in a telecommunication system (77), the telecommunication system (77) comprising a database server (711) that is connected to the mobile communications device (700); the mobile telecommunication device (700) comprising a processor (703), a display device (725) and a memory (707); wherein the memory (707) configured to store at least a first, a second and a third application (715, 717, 719), wherein the first application (715) comprises first instructions that, when executed on the processor (703), display on the display device (725) a graphical user interface (727), wherein the second and third applications (717, 719) comprise respective second and third instructions that, when executed on the processor (703), receive and process a respective first and second data set and display using the first application a first and second set of data elements (A-G) using a first display pattern (731) on the graphical user interface (727), wherein the first display pattern (731) spans multiple display pages of the graphical user interface (727), the method comprising configuring the first application (715) for:
- selecting a subset of data elements (B-E) of the first and second set of data elements (A-G) to be displayed on the graphical user interface (727) using a second display pattern (732) that spans a reduced number of display pages of the multiple display pages;
- defining a compact data set comprising non-duplicated data of the first and second data sets (741, 743);
- selecting a data portion (745) of the compact data set required for generating the subset of data elements (B-E);
- generating a data access request, the data access request requesting access to the data portion (745);
- retrieving the data portion (745) from the database server (711);
- controlling the second and third applications (717, 7119) for displaying the subset of data elements on the graphical user interface (727) using the retrieved data portion (745).

2. The method of claim 1, wherein the selecting of the subset of data elements is performed in order to prevent usage of the scrolling function of the graphical user interface.

3. The method of claim 1 or 2, wherein the reduced number of display pages comprises a single display page, wherein of the subset of data elements (B-E) is displayed on a portion of the single display page.

4. The method of any of the preceding claims, wherein the display device (725) comprises a touch sensitive display screen, wherein the selecting of the subset of the data elements (B-E) is triggered by an interaction of a user of the mobile telecommunication device (700) with the mobile telecommunication device (700), the interaction comprising a selection of icons on the display device, each icon corresponding to each data element of the subset of data elements (B-E).

5. The method of any of the preceding claims 1-3, wherein the selecting of the subset of the data elements (B-E) is triggered by an interaction of a user of the mobile telecommunication device (700) with the mobile telecommunication device (700), the interaction comprising a navigating using navigation bar of the graphical user interface through the subset of data elements (B-E).

6. The method of any of the preceding claims, further comprising generating a database cursor for retrieving the data portion (745), wherein the data access request indicates the database cursor.

7. The method of any of preceding claims further comprising for each data element of the subset of the data elements (B-E):
- selecting corresponding data in the data portion used to generate the data element;
- generating a database cursor for accessing the corresponding data.

8. The method of claim 7, further comprising controlling the second and third applications (717, 719) to sequentially display the subset of the data elements (B-E) based on the generated database cursors.

9. The method of claim 7, further comprising controlling the second and third applications (717, 719) to display in parallel the subset of the data elements (B-E) based on the generated database cursors.

10. The method of any of any of the preceding claims, wherein controlling the first application (715) comprises controlling the first application to act as a hooking application.

11. A telecommunication device (700) in a telecommunication system (77), the telecommunication system (77) comprising a database server (711) that is connected to the mobile communications device (700); the mobile telecommunication device (700) comprising a processor (703), a display device (725) and a memory (707); wherein the memory (707) configured to store at least a first, a second and a third application (715, 717, 719), wherein the first application (715) comprises first instructions that, when executed on the processor (703), display on the display device (725) a graphical user interface (727), wherein the second and third applications (717, 719) comprise respective second and third instructions that, when executed on the processor (703), receive and process a respective first and second data set and display using the first application a first and second set of data elements (A-G) using a first display pattern (731) on the graphical user interface (727), wherein the first display pattern (731) spans multiple display pages of the graphical user interface (727), wherein the first application (715) is configured for:
- selecting a subset of data elements (B-E) of the first and second set of data elements (A-G) to be displayed on the graphical user interface (727) using a second display pattern (732) that spans a reduced number of display pages of the multiple display pages;
- defining a compact data set comprising non-duplicated data of the first and second data sets (741, 743);
- selecting a data portion (745) of the compact data set required for generating the subset of data elements (B-E);
- generating a data access request, the data access request requesting access to the data portion (745);
- retrieving the data portion (745) from the database server (711);
- controlling the second and third applications (717, 7119) for displaying the subset of data elements on the graphical user interface (727) using the retrieved data portion (745).
